# EUROPÄISCHE PATENTSCHRIFT

(11) **EP 4 028 289 B1**
(45) Veröffentlichungstag und Bekanntmachung des Hinweises auf die Patenterteilung: **24.01.2024**
(21) Anmeldenummer: 20760832.4
(22) Anmeldetag: 20.08.2020
(51) Int. Cl.: B60R 11/02

(54) **LENKSÄULE**
STEERING COLUMN
COLONNE DE DIRECTION

(30) Priorität: 09.09.2019 DE 102019213669
(43) Veröffentlichungstag der Anmeldung: 20.07.2022
(73) Patentinhaber: VOLKSWAGEN AKTIENGESELLSCHAFT, 38440 Wolfsburg (DE)
(72) Erfinder: VIOHL, Arne, 38442 Wolfsburg (DE); KIESEWETTER, Thomas, 38114 Braunschweig (DE); FRICKE, Thomas, 38461 Danndorf (DE)
(86) Internationale Anmeldenummer: PCT/EP2020/073428
(87) Internationale Veröffentlichungsnummer: WO 2021/047888

(56) Entgegenhaltungen:
- EP-A1- 1 783 004
- CN-A- 106 882 257
- CN-A- 108 819 866
- CN-A- 109 050 423

## Beschreibung

Die Erfindung betrifft eine Lenksäule mit den Merkmalen vom Oberbegriff des Patentanspruchs 1.

Derartige Lenksäulen sind der Anmelderin aus dem allgemeinen und in Serie befindlichen Stand bekannt. Dabei stellt das Schaltermodul ein Modul zum Ein- und Ausschalten von diversen Funktionen dar, welches mit einer eigenen Elektronik ausgestattet ist. Über einen oder mehrere vorhandene Betätigungshebel können Funktionen wie Scheibenwischer, Fahrtrichtungsanzeiger, Fernlicht, Geschwindigkeitsregelanlage usw. aktiviert werden.

Das Schaltermodul umgreift die Lenksäule an einer Stelle formschlüssig, so dass sich eine durch ein Lenkrad verursachte Drehbewegung der Lenksäule auch auf ein drehbares Bauteil innerhalb des Schaltermoduls überträgt. Hierdurch können ebenfalls Funktionen ausgelöst oder deaktiviert werden (beispielsweise Rückstellung des Fahrtrichtungsanzeigers).

Aus der EP 1 783 004 A1 ist der Anmelderin eine Lenksäule nach dem Oberbegriff von Anspruch 1 bekannt geworden, bei der in eine die Lenksäule umgebenden Lenksäulenverkleidung eine Öffnung eingebracht ist. Durch die Öffnung ragt eine elektronische Schnittstelle in Form eines elektrischen Steckverbinders hindurch. Der elektrische Steckverbinder dient zum Aufsetzen einer Halterung für ein Objekt in Form eines mobilen, elektrischen Gerätes. Das mobile, elektrische Gerät kann beispielsweise ein Diagnosegerät, ein Mobiltelefon oder auch ein MP3-Player sein.

In US 2010/0 045 013 A1 wird eine Lenksäule beschrieben, auf welche eine aus einem Lenkstock-Schaltermodul, einem Winkelsensormodul und einem Startverriegelungsmodul bestehende Lenksäulen-Baueinheit befestigbar bzw. befestigt ist. An der Unterseite des Lenkstock-Schaltermoduls ist eine Tragplatte befestigt, die zur Befestigung des Startverriegelungsmoduls an dem Lenkstock-Schaltermoduls dient. Die Tragplatte ist lösbar mit dem Lenkstock-Schaltermodul befestigt. Eine Befestigung der Tragplatte am Lenkstock-Schaltermodul erfolgt durch ein Einschieben der Tragplatte mit Randbereichen in Führungsprofile des Lenkstock-Schaltermoduls. Die Tragplatte dient als Schnittstelle zur Befestigung des Startverriegelungsmoduls, welches wiederum als Halterung für ein Objekt dient, welches als Verriegelungselement für das Startverriegelungsmodul dient.

Die vorliegende Erfindung es sich zur Aufgabe gestellt, eine Lenksäule bereitzustellen, bei der auf einfache und platzsparende Weise die Grundvoraussetzung für die Realisierung einer stabilen Halterung für ein Objekt geschaffen wird.

Es sollen mit der vorliegenden Erfindung auch eine Montageeinheit für eine Lenksäule sowie ein Kraftfahrzeug mit einer erfindungsgemäßen Lenksäule bereitgestellt werden.

Diese Aufgaben werden durch eine Lenksäule mit den Merkmalen von Patentanspruch 1 durch eine Montageeinheit mit den Merkmalen des Patentanspruchs 6 sowie durch ein Kraftfahrzeug mit den Merkmalen von Anspruch 8 gelöst. Vorteilhafte Ausbildungen beziehungsweise Weiterbildungen sind den jeweils abhängigen Ansprüchen zu entnehmen.

Die Erfindung geht aus von einer Lenksäule mit einem die Lenksäule zumindest bereichsweise umgebenden Schaltermodul. Das Schaltermodul weist wenigstens einen Betätigungshebel zum Auslösen wenigstens einer Funktion auf.

Es wird nun vorgeschlagen, dass im Bereich des Schaltermoduls eine mechanische Schnittstelle zur Befestigung wenigstens einer Halterung für ein Objekt vorhanden ist. Die mechanische Schnittstelle als gesondertes, am Schaltermodul befestigtes Bauteil ausgebildet. Hierdurch kann auf sehr einfache und platzsparende Art und Weise die Grundvoraussetzung für die Ausbildung einer zuverlässigen Halterung für ein Objekt an einer Lenksäule bereitgestellt werden. Sollte in bestimmten Ausführungen eines Kraftfahrzeugs eine solche Halterung für ein Objekt nicht benötigt werden, so kann die Schnittstelle auf einfache Weise durch einen Deckel oder einen Teil einer Lenksäulenverkleidung abgedeckt werden. Da die Schnittstelle als gesondertes Bauteil ausgebildet ist, können erforderliche bauliche Veränderungen an einem vorhandenen Schaltermodul auf ein Minimum beschränkt werden.

Es wird ferner vorgeschlagen, dass das Bauteil auf der Seite der zu befestigenden Halterung eine Kontur zur Befestigung der Halterung aufweist.

Auf diese Weise ist es möglich, dass eine zu befestigende Halterung mit einer entsprechenden Gegenkontur mit der Kontur des Bauteils auf leichte Weise zusammengesteckt und vorfixiert werden kann.

Um das die Schnittstelle bildende Bauteil, welches zur Befestigung einer Halterung für ein Objekt dient, möglichst kompakt ausbilden zu können, ist erfindungsgemäß die Kontur zur Befestigung der Halterung durch den Umriss einer Vertiefung im Bauteil gebildet. In diesem Fall ist die Gegenkontur der zu befestigenden Halterung dann als Anformung auszubilden.

Erfindungsgemäß wird vorgeschlagen, dass die Kontur zur Befestigung der Halterung im Umriss H-förmig ausgebildet ist. Eine derartige Ausbildung ermöglicht einen sehr guten Halt einer befestigten Halterung sowohl in Fahrzeuglängs- als auch in Fahrzeugquerrichtung.

Eine derartige Wirkung kann noch dadurch verstärkt werden, wenn ein H-Schenkel der Kontur parallel zu einer gewöhnlichen Fahrtrichtung ausgerichtet ist.

Die Erfindung kann auch dadurch weitergebildet sein, dass in einem solchen Fall, bei dem an dem Bauteil eine Halterung befestigt ist, zumindest im Bereich der Kontur des Bauteils und der Gegenkontur der Halterung das Material der Halterung weicher ausgebildet ist als das Material des Bauteils.

Eine derartige Weiterbildung trägt dazu bei, dass das Bauteil, welches die mechanische Schnittstelle zur Halterung bildet, durch die Halterung nicht beschädigt werden kann. Der Austausch einer beschädigten Halterung ist wesentlich leichter möglich als ein Austausch des am Schaltermodul befestigten Bauteils.

Es ist einem stabilen, festen Sitz einer mit dem Bauteil befestigten Halterung förderlich, wenn die Abmaße der Kontur des Bauteils und der Gegenkontur der zu befestigenden Halterung derart gewählt sind, dass die Kontur zu einer Aufweitung oder zu einer Stauchung der Gegenkontur führt.

Schließlich wird als mögliche Ausbildung der Lenksäule noch vorgeschlagen, dass das Bauteil Anbindungspunkte zur Befestigung einer Lenksäulenverkleidung aufweist. Durch eine derartige Ausbildung kann die Befestigung einer Lenksäulenverkleidung erleichtert beziehungsweise stabilisiert werden.

Es soll mit der vorliegenden Erfindung auch eine Montageeinheit für eine erfindungsgemäße Lenksäule unter Schutz gestellt werden. Die Montageeinheit besteht aus einem Schaltermodul (wie zuvor beschrieben) und einem an dem Schaltermodul befestigten Bauteil. Das Bauteil weist wenigstens eine durch den Umriss einer Vertiefung oder durch den Umriss einer Anformung gebildete Kontur auf, die mit einer durch den Umriss einer Vertiefung oder durch den Umriss einer Anformung gebildeten Gegenkontur einer Halterung für ein Objekt zusammensteckbar ist.

Mit der Erfindung wird schließlich auch ein Kraftfahrzeug unter Schutz gestellt, welches eine erfindungsgemäße Lenksäule aufweist.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: die Draufsicht auf eine Lenksäule, welche von einem Schaltermodul mit der besagten, daran befestigten Schnittstelle umgeben ist,
- Fig. 2: eine perspektivische Einzeldarstellung des Schaltermoduls mit der daran befestigten Schnittstelle,
- Fig. 3: eine perspektivische Einzeldarstellung der Schnittstelle,
- Fig. 4: eine Ansicht der Schnittstelle gemäß Ansicht IV aus Fig. 3,
- Fig. 5: eine Seitendarstellung der Schnittstelle gemäß Ansicht V aus Fig. 4 und
- Fig. 6: eine perspektivische Explosionsdarstellung der aus dem Schaltermodul und der Schnittstelle gebildeten Montageeinheit und einer daran zu befestigenden Halterung für ein mobiles Endgerät.

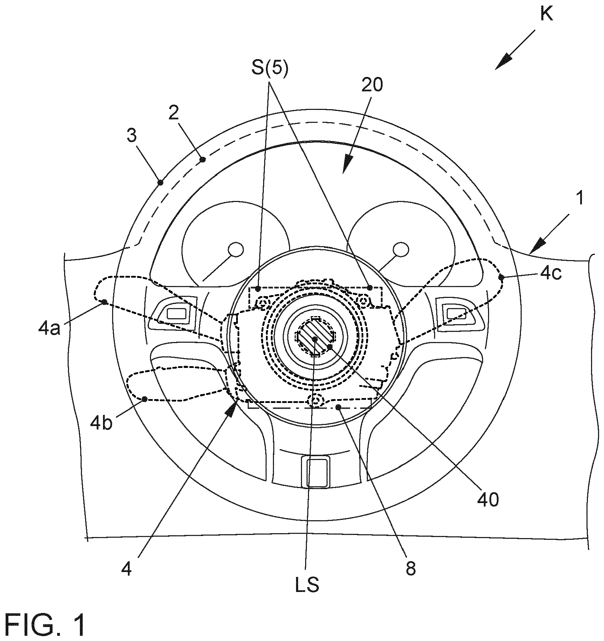

Es wird zunächst auf die Fig. 1 Bezug genommen. In dieser Figur ist ein Kraftfahrzeug K im Bereich seines Cockpits ersichtlich. In diesem Bereich ist ein Lenkrad 3 vor einer Instrumententafel 1 angeordnet. Das Lenkrad 3 ist bewegungsmäßig mit einer Lenksäule LS gekoppelt.

Hinter dem Lenkrad 3, also zwischen der Instrumententafel 1 und dem Lenkrad 3 ist ein Schaltermodul 4 für die Lenksäule LS angeordnet, welches die Lenksäule LS an dieser Stelle umgibt. Von dem Schaltermodul 4, welches mit einer nicht näher dargestellten Elektronik ausgestattet ist, erstrecken sich mehrere Hebel 4a, 4b und 4c. Der Hebel 4a dient für eine Fahrtrichtungsanzeige beziehungsweise zur Aktivierung eines Fernlichtes, der Hebel 4b dient zur Betätigung einer Geschwindigkeitsregelanlage und der Hebel 4c dient zur Betätigung von Scheibenwischern.

Hinter dem Lenkrad 3 ist auch ein Kombiinstrument 20 mit Rundinstrumenten ersichtlich, welches unter einer Instrumentenhutze 2 der Instrumententafel 1 angeordnet ist.

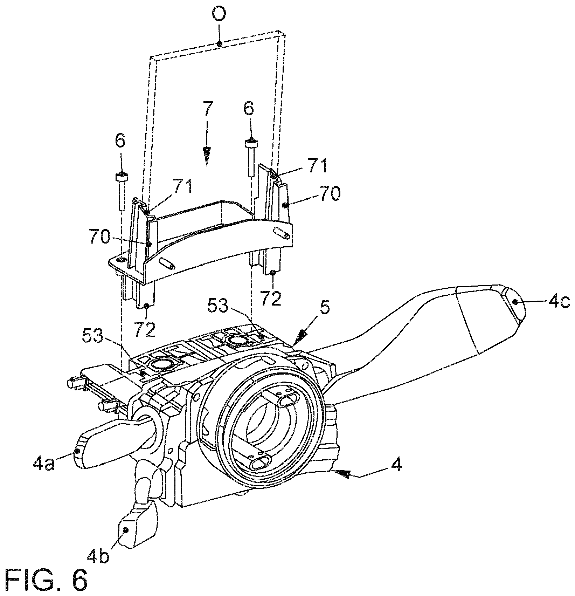

Des Weiteren ist eine mechanische Schnittstelle S gestrichelt angedeutet. Die Schnittstelle S ist als gesondertes, am Schaltermodul 4 befestigtes Bauteil 5 ausgebildet. Das Bauteil 5 dient wiederum zur Befestigung einer Halterung 7 für ein Objekt O (vergleiche auch Fig. 6).

Schließlich ist in dieser Figur noch eine elektronische Lenksäulenverriegelung 8 gestrichelt angedeutet, welche ebenfalls am Schaltermodul 4 befestigt ist.

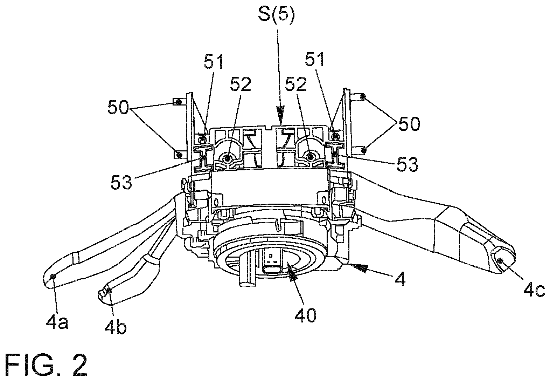

In der Fig. 2 ist nun das Schaltermodul 4 mitsamt Bauteil 5 von oben und leicht perspektivisch dargestellt. Es ist gut ersichtlich, dass das Bauteil 5 am Schaltermodul 4 befestigt ist. Zur Aufnahme der Lenksäule LS weisen das Schaltermodul 4 eine Durchgangsöffnung 40 und auch das Bauteil 5 eine entsprechende Öffnung auf (vergleiche auch Fig. 1).

Befestigungspunkte 52 dienen zur Befestigung des Bauteils 5 an der hier nicht näher dargestellten Lenksäulenverriegelung (Lenkradschloss). Des Weiteren sind bolzenartige Anbindungspunkte 50 erkennbar, welche zur Anbindung des Bauteils 5 an eine Lenksäulenverkleidung dienen. Schließlich sind in dieser Figur noch Befestigungspunkte 51 für die besagte Halterung 7 ersichtlich, welche zur finalen Verschraubung der über zwei Konturen 53 fixierten Halterung 7 dienen.

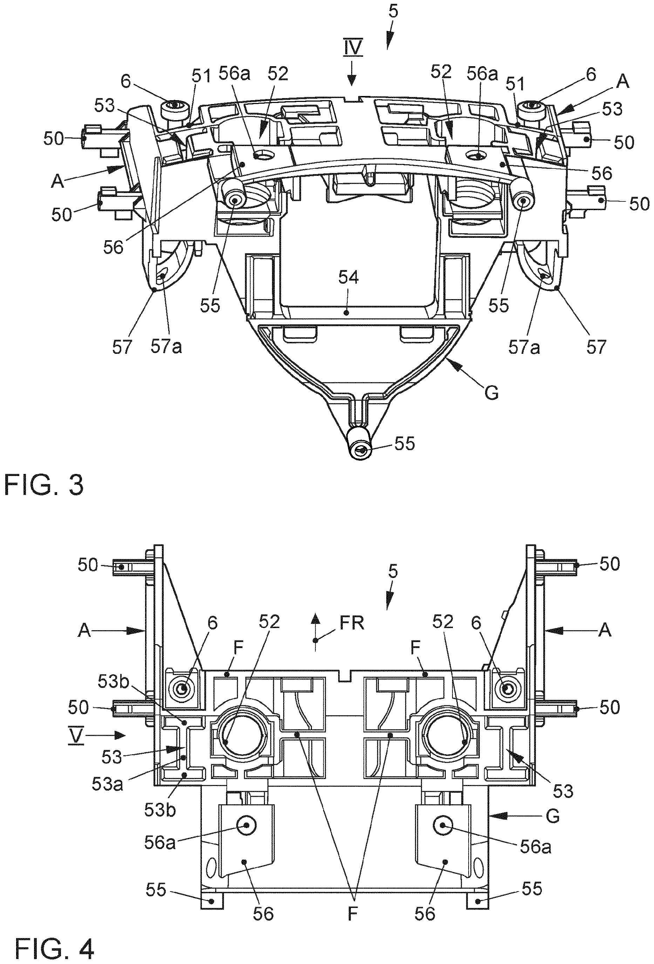

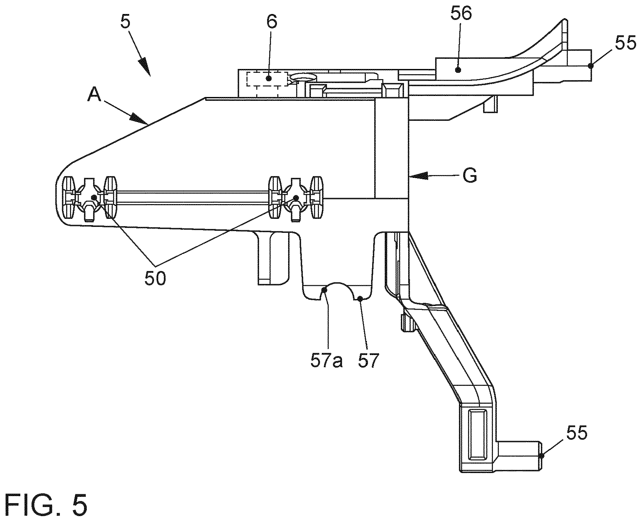

Anhand der Figuren 3 bis 5 soll nun das als Schnittstelle dienende Bauteil 5 in einer Einzeldarstellung näher erläutert werden.

Das Bauteil 5 weist in der in den Figuren gezeigten Montageausrichtung einen rahmenartigen Grundkörper G auf, welcher eine rechteckige, insbesondere quadratische Aufnahmeöffnung 54 für einen Teil einer Lenksäulenverkleidung bereitstellt. Ferner sind am rahmenartigen Grundkörper G drei dreieckförmig angeordnete Befestigungspunkte 55 zur Befestigung des Bauteils 5 mit dem Schaltermodul 4 vorhanden. Die Befestigungspunkte 55 sind als Durchgangslöcher ausgebildet. Die Befestigungspunkte 52, welche zur Befestigung des Bauteils 5 mit einer Lenksäulenverriegelung dienen, sind ebenfalls als Durchgangsöffnungen ausgebildet.

An der Oberseite des Grundkörpers G sind zwei Anformungen 56 mit Durchgangsöffnungen 56a vorhanden. Die Durchgangsöffnungen 56a dienen als Zentrierlöcher und/oder als Befestigungslöcher für die Lenksäulenverkleidung.

An den Grundkörper G sind seitlich zwei Anformungen A angeformt, welche vom Grundkörper G nach hinten, also in eine Fahrtrichtung FR weisen und die bereits erwähnten stift- oder bolzenartigen Anbindungspunkte 50 für die Lenksäulenverkleidung aufweisen.

Im Bereich des Grundkörpers G sind zwei sich nach unten erstreckende, hakenartige Anformungen 57 vorhanden. Ein freies Ende der hakenartigen Anformungen 57 liegt innen und ist aufwärtsgerichtet. Am Grund der hakenartigen Anformungen 57 sind Öffnungen 57a eingebracht.

Die hakenartigen Anformungen 57 dienen als Haltelaschen zum Vorverklipsen der erwähnten elektronischen Lenksäulenverriegelung 8 vor ihrer Verschraubung mit dem Schaltermodul 4. Insofern führen die hakenartigen Anformungen 57 zu einer Montageerleichterung der in Fig. 1 angedeuteten, elektronischen Lenksäulenverriegelung 8.

Nunmehr werden die bereits erwähnten Konturen 53 zur Befestigung der Halterung 7 (vergleiche Fig. 6) im Detail erläutert. Die Konturen 53 sind jeweils durch den Umriss einer von oben in den Grundkörper G eingebrachten Vertiefung gebildet. Der Umriss der Vertiefung, also die Kontur 53 ist H-förmig ausgebildet und weist einen H-Schenkel 53a und zwei H-Seiten 53b auf. Der H-Schenkel 53a ist parallel zur Fahrtrichtung FR ausgerichtet.

In Fig. 6 ist ersichtlich, dass die Halterung 7, welche mit dem Bauteil 5 befestigt werden soll, zwei nach unten abstehende, durch den Umriss von Anformungen gebildete Gegenkonturen 72 aufweist. Jede Gegenkontur 72 ist entsprechend der Kontur 53 im Umriss ebenfalls H-förmig ausgebildet.

Des Weiteren ist die Halterung 7 zumindest im Bereich der Gegenkonturen 72 weicher ausgebildet als das Bauteil 5 im Bereich der Konturen 53. Zu diesem Zweck ist es denkbar, das Bauteil 5 und/oder die Halterung 7 als Zweikomponententeil auszubilden. Es kann somit sichergestellt werden, dass beim Einstecken der Halterung 7 in die Konturen 53 des Bauteils 5 die Konturen 53 beziehungsweise das Bauteil 5 nicht beschädigt werden.

Die Montage der Halterung 7 erfolgt nun in der Weise, dass die Halterung 7 mit ihren Gegenkonturen 72 von oben in die Konturen 53 eingesteckt wird.

Vorzugsweise sind die Außenabmessungen der Gegenkonturen 72 geringfügig größer gewählt als die Abmessungen der Konturen 53. Die Gegenkonturen 72 werden dadurch beim Einstecken in die Konturen 53 etwas gestaucht. Dies trägt dazu bei, dass die Halterung 7 einen sehr festen und sicheren Halt im Bauteil 5 hat.

Ein finales Verschrauben der Halterung 7 kann an den Befestigungspunkten 51 über Befestigungsmittel 6 erfolgen, welche vorzugsweise als Schrauben ausgebildet sind. Dabei liegt die Halterung 7 mit einer nach unten weisenden Auflagefläche auf einer Auflagefläche F des Bauteils 5 auf. Die Auflagefläche F des Bauteils 5 wird durch rippenartige Vorsprünge im Bereich des Grundkörpers G gebildet.

Die H-förmige Ausgestaltung der Konturen 53 beziehungsweise der Gegenkonturen 72 führt zu einer sehr sicheren Fixierung der Halterung 7 sowohl in Fahrzeuglängs- als auch in Fahrzeugquerrichtung.

Wie ersichtlich ist, dient die Halterung 7 ihrerseits zur Halterung eines gestrichelt angedeuteten Objektes O. Das Objekt O kann beispielsweise ein Smartphone, einen MP3-Player oder dergleichen sein. Dazu weist die Halterung 7 nach oben weisende Haltearme 70 auf, welche leicht nach innen vorgespannt sind. Eine vertikal verlaufend Nut 71 in jedem der Haltearme 70 dient zum Einschieben des Objektes O, wobei die Haltearme 70 geringfügig federnd auseinander bewegt werden und sich mit Vorspannung an das Objekt O anlegen. Abweichend vom Ausführungsbeispiel sind beliebige andere Ausgestaltungen der Halterung 7 möglich. Beispielsweise kann die Halterung 7 anstatt der Haltearme 70 mit einer oben liegenden Ablagefläche zur Ablage beliebiger Gegenstände ausgebildet sein.

Sollte die Befestigung einer Halterung 7 nicht erwünscht sein, so kann die Schnittstelle S beziehungsweise das Bauteil 5 durch den Teil einer nicht näher dargestellten Lenksäulenverkleidung oder Innenverkleidung abgedeckt werden.

### Bezugszeichenliste

- 1: Instrumententafel
- 2: Instrumentenhutze
- 3: Lenkrad
- 4: Schaltermodul für eine Lenksäule
- 4a: Hebel für Fahrtrichtungsanzeiger/Fernlicht
- 4b: Hebel für Geschwindigkeitsregelanlage
- 4c: Hebel für Scheibenwischerbetätigung
- 5: Bauteil
- 6: Befestigungsmittel
- 7: Halterung
- 8: Elektronische Lenksäulenverriegelung
- 20: Kombiinstrument
- 40: Durchgangsöffnung
- 50: Anbindungspunkte Lenksäulenverkleidung
- 51: Befestigungspunkte für die Halterung
- 52: Befestigungspunkte Lenksäulenverkleidung
- 53: Kontur zur Befestigung der Halterung
- 53a: H-Schenkel
- 53b: H-Seiten
- 54: Aufnahmeöffnung für Teil der Lenksäulenverkleidung
- 55: Befestigungspunkte zur Anbindung an das Schaltermodul
- 56: Anformungen
- 56a: Durchgangsöffnungen
- 57: hakenartige Anformungen
- 57a: Öffnungen
- 70: Haltearme
- 71: Nuten
- 72: Gegenkontur
- A: Anformungen
- F: Auflagefläche
- G: Grundkörper
- FR: Fahrtrichtung
- K: Kraftfahrzeug
- LS: Lenksäule
- O: Objekt
- S: Schnittstelle

## Patentansprüche

1. Lenksäule (LS) mit einem die Lenksäule (LS) zumindest bereichsweise umgebenden Schaltermodul (4), welches wenigstens einen Betätigungshebel (4a, 4b, 4c) zum Auslösen wenigstens einer Funktion aufweist, wobei im Bereich des Schaltermoduls (4) eine mechanische Schnittstelle (S) zur Befestigung wenigstens einer Halterung (7) für ein Objekt (O) vorhanden ist, welche als gesondertes, am Schaltermodul (4) befestigtes Bauteil (5) ausgebildet ist, wobei das Bauteil (5) auf der Seite der zu befestigenden Halterung (7) wenigstens eine Kontur (53) zur Befestigung der Halterung (7) aufweist, **dadurch gekennzeichnet, dass** die Kontur (53) zur Befestigung der Halterung (7) durch den Umriss einer Vertiefung gebildet ist, welche im Umriss H-förmig ausgebildet ist.

2. Lenksäule (LS) nach Anspruch 1, **dadurch gekennzeichnet, dass** ein H-Schenkel (53a) der Kontur (53) parallel zu einer gewöhnlichen Fahrtrichtung (FR) ausgerichtet ist.

3. Lenksäule (LS) nach einem der vorhergehenden Ansprüche, **dadurch gekennzeichnet, dass** mit dem Bauteil (5) eine Halterung (7) befestigt ist, wobei zumindest im Bereich der Kontur (53) des Bauteils (5) und einer in die Kontur (53) gesteckten Gegenkontur (72) der Halterung (7) das Material der Halterung (7) weicher ausgebildet ist als das Material des Bauteils (5).

4. Lenksäule (LS) nach Anspruch 3, **dadurch gekennzeichnet, dass** die Abmaße der Kontur (53) und der Gegenkontur (72) derart gewählt sind, dass die Kontur (53) zu einer Stauchung der Gegenkontur (72) führt.

5. Lenksäule (LS) nach einem der vorhergehenden Ansprüche, **dadurch gekennzeichnet, dass** das Bauteil (5) Anbindungspunkte (50, 56a) zur Befestigung einer Lenksäulenverkleidung aufweist.

6. Montageeinheit einer Lenksäule (LS) nach einem der vorhergehenden Ansprüche, wobei die Montageeinheit aus einem Schaltermodul (4) und einem an dem Schaltermodul (4) befestigten Bauteil (5) besteht, **dadurch gekennzeichnet, dass** das Bauteil (5) wenigstens eine durch den Umriss einer Vertiefung gebildete Kontur (53) aufweist, die mit einer durch den Umriss einer Anformung gebildeten Gegenkontur (72) einer Halterung (7) für ein Objekt (O) zusammensteckbar ist, wobei die Kontur (53) im Umriss H-förmig ausgebildet ist.

7. Montageeinheit nach Anspruch 6, **dadurch gekennzeichnet, dass** zumindest im Bereich der Kontur (53) des Bauteils (5) und der Gegenkontur (72) der Halterung (7) das Material der Halterung (7) weicher ausgebildet ist als das Material der Bauteils (5).

8. Kraftfahrzeug (K), **gekennzeichnet durch** eine Lenksäule (LS) nach einem der vorhergehenden Ansprüche 1 bis 5.

## Claims

1. Steering column (LS) having a switch module (4) which surrounds the steering column (LS) at least in regions and has at least one actuating lever (4a, 4b, 4c) for triggering at least one function, wherein, in the region of the switch module (4), there is a mechanical interface (S) for the fastening of at least one holder (7) for an object (0), the mechanical interface being designed as a separate component (5) which is fastened to the switch module (4), wherein the component (5) on the side of the holder (7) to be fastened has at least one contour (53) for the fastening of the holder (7), **characterized in that** the contour (53) for the fastening of the holder (7) is formed by the outline of a depression which is H-shaped in outline.

2. Steering column (LS) according to Claim 1, **characterized in that** an H limb (53a) of the contour (53) is oriented parallel to a conventional direction of travel (FR).

3. Steering column (LS) according to either of the preceding claims, **characterized in that** a holder (7) is fastened to the component (5), wherein, at least in the region of the contour (53) of the component (5) and a mating contour (72), which is plugged into the contour (53), of the holder (7), the material of the holder (7) is softer than the material of the component (5).

4. Steering column (LS) according to Claim 3, **characterized in that** the dimensions of the contour (53) and of the mating contour (72) are selected in such a manner that the contour (53) leads to compression of the mating contour (72).

5. Steering column (LS) according to one of the preceding claims, **characterized in that** the component (5) has attachment points (50, 56a) for the fastening of a steering column covering.

6. Installation unit of the steering column (LS) according to one of the preceding claims, wherein the installation unit consists of a switch module (4) and a component (5) fastened to the switch module (4), **characterized in that** the component (5) has at least one contour (53) which is formed by the outline of a depression and can be plugged together to a mating contour (72), which is formed by the outline of a moulding, of a holder (7) for an object (0), wherein the contour (53) is H-shaped in outline.

7. Installation unit according to Claim 6, **characterized in that**, at least in the region of the contour (53) of the component (5) and the mating contour (72) of the holder (7), the material of the holder (7) is softer than the material of the component (5).

8. Motor vehicle (K), **characterized by** a steering column (LS) according to one of the preceding Claims 1 to 5.

## Revendications

1. Colonne de direction (LS) comportant un module de commutation (4) entourant la colonne de direction (LS) au moins dans certaines régions, lequel module présente au moins un levier d'actionnement (4a, 4b, 4c) servant au déclenchement d'au moins une fonction, une interface mécanique (S) servant à la fixation d'au moins un support (7) pour un objet (0) étant prévue dans la région du module de commutation (4), laquelle interface est réalisée sous forme de composant (5) distinct, fixé au module de commutation (4), le composant (5) présentant, sur le côté du support (7) devant être fixé, au moins un contour (53) servant à la fixation du support (7), **caractérisée en ce que** le contour (53) servant à la fixation du support (7) est formé par le profil d'un évidement, lequel est réalisé de manière à présenter un profil en forme de H.

2. Colonne de direction (LS) selon la revendication 1, **caractérisée en ce qu'**une branche de H (53a) du contour (53) est orientée parallèlement à une direction de conduite (FR) usuelle.

3. Colonne de direction (LS) selon l'une des revendications précédentes, **caractérisée en ce qu'**un support (7) est fixé au composant (5), le matériau du support (7) étant réalisé de manière plus molle que le matériau du composant (5) au moins dans la région du contour (53) du composant (5) et d'un contour conjugué (72), enfiché dans le contour (53), du support (7).

4. Colonne de direction (LS) selon la revendication 3, **caractérisée en ce que** les dimensions du contour (53) et du contour conjugué (72) sont sélectionnées de telle sorte que le contour (53) provoque une compression du contour conjugué (72).

5. Colonne de direction (LS) selon l'une des revendications précédentes, **caractérisée en ce que** le composant (5) présente des points de connexion (50, 56a) servant à la fixation d'un cache de colonne de direction.

6. Unité de montage d'une colonne de direction (LS) selon l'une des revendications précédentes, l'unité de montage étant constituée d'un module de commutation (4) et d'un composant (5) fixé au module de commutation (4), **caractérisée en ce que** le composant (5) présente au moins un contour (53) formé par le profil d'un évidement, lequel contour peut être assemblé avec un contour conjugué (72), formé par le profil d'une partie façonnée, d'un support (7) pour un objet (0), le contour (53) étant réalisé de manière à présenter un profil en forme de H.

7. Unité de montage selon la revendication 6, **caractérisée en ce que** le matériau du support (7) est réalisé de manière plus molle que le matériau du composant (5) au moins dans la région du contour (53) du composant (5) et du contour conjugué (72) du support (7).

8. Véhicule automobile (K), **caractérisé par** une colonne de direction (LS) selon l'une des revendications précédentes 1 à 5.
